# EUROPÄISCHE PATENTSCHRIFT

(11) **EP 3 292 303 B1**
(45) Veröffentlichungstag und Bekanntmachung des Hinweises auf die Patenterteilung: **19.12.2018**
(21) Anmeldenummer: 16720716.6
(22) Anmeldetag: 29.04.2016
(51) Int. Cl.: F04B 35/00, B60T 13/26, B60T 17/22, F04B 51/00, F04B 49/06

(54) **DRUCKLUFTVERSORGUNGSANLAGE MIT VERRINGERTEM WARTUNGSAUFWAND**
APPARATUS FOR SUPPLYING PRESSURIZED AIR WITH REDUCED MAINTENANCE
APPAREIL POUR DÉLIVRER DE L'AIR COMPRIMÉ AVEC MAINTENANCE RÉDUITE

(30) Priorität: 04.05.2015 DE 102015106842
(43) Veröffentlichungstag der Anmeldung: 14.03.2018
(73) Patentinhaber: KNORR-BREMSE Systeme für Nutzfahrzeuge GmbH, 80809 München (DE)
(72) Erfinder: BOZSIK, Richard, 1191 Budapest (HU)
(86) Internationale Anmeldenummer: PCT/EP2016/000696
(87) Internationale Veröffentlichungsnummer: WO 2016/177457

(56) Entgegenhaltungen:
- EP-A1- 1 129 887
- EP-A1- 2 514 620
- DE-A1-102008 005 428
- DE-A1-102008 054 164
- US-A1- 2008 161 989

## Beschreibung

Die Erfindung betrifft eine Druckluftversorgungsanlage für ein Fahrzeug gemäß dem Oberbegriff des Anspruchs 1.

Eine Druckluftversorgungsanlage für ein Fahrzeug, insbesondere für ein Nutzfahrzeug, umfasst in der Regel mindestens einen Kompressor. Dieser wird mechanisch vom Verbrennungsmotor des Fahrzeugs angetrieben. Im Antriebsstrang zwischen Verbrennungsmotor und Kompressor befindet sich gewöhnlich ein Getriebe. Eine gattungsgemäße Druckluftversorgungsanlage ist beispielsweise aus der DE 102 406 00 A1 bekannt.

Das Getriebe ist während des Betriebs einem Verschleiß unterworfen. Es hat sich herausgestellt, dass Vorhersagen über die notwendigen Wartungsintervalle schwierig sind. Da die Druckluftversorgungsanlage unter anderem die unverzichtbaren Druckluftbremsen versorgt, ist bei einem Ausfall des Getriebes eine Weiterfahrt nicht mehr möglich. Das Wartungsintervall muss daher so großzügig dimensioniert sein, dass das Getriebe auch unter ungünstigen Umständen innerhalb dieses Intervalls nicht durch Verschleiß ausfällt.

Dies hat zur Folge, dass zwecks Wartung des Getriebes eine Werkstatt vielfach bereits zu einem Zeitpunkt aufgesucht werden muss, zu dem die Lebensdauer des Getriebes tatsächlich noch nicht erschöpft ist. Umgekehrt ist es möglich, dass durch die Installation großer zusätzlicher Druckluftverbraucher am Fahrzeug der Kompressor und damit das Getriebe wesentlich stärker belastet wird als bei der Dimensionierung des Wartungsintervalls einkalkuliert. Das Getriebe kann dann bereits innerhalb des Wartungsintervalls ohne Vorankündigung ausfallen.

Die EP 1 129 887 A1 offenbart eine gattungsgemäße Druckluftversorgungsanlage für ein Fahrzeug, bei welcher ein Kompressor zur Erzeugung von Druckluft zum einen über einen elektrischen Hilfsmotor angetrieben werden kann und zum anderen auch über ein zwischengeschaltetes Übersetzungsgetriebe durch den Fahrzeugmotor angetrieben werden kann. Die Steuerung dieser Druckluftversorgungsanlage umfasst eine Sensorik, welche verschiedene Drehzahlinformationen mit einbezieht.

Die US 2008/0161989 A1 offenbart ein auf verschiedene Sensoren basierendes System eines Fahrzeugs zur Überwachung von Fahrzeugkomponenten oder Untersystemen, womit unter anderem eine Wartungsdiagnose erstellbar ist.

Es ist daher die Aufgabe der Erfindung, eine Druckluftversorgungsanlage zur Verfügung zu stellen, bei der das Wartungsintervall für das Getriebe zwischen Antriebsmaschine und Kompressor in bessere Übereinstimmung mit dem tatsächlich auftretenden Verschleiß gebracht werden kann. Weiterhin sollen Möglichkeiten geschaffen werden, den Verschleiß zu reduzieren.

Diese Aufgaben werden erfindungsgemäß gelöst durch eine Druckluftversorgungsanlage gemäß Hauptanspruch sowie durch ein Verfahren zum Betreiben gemäß Nebenanspruch. Weitere vorteilhafte Ausgestaltungen ergeben sich aus den darauf rückbezogenen Unteransprüchen.

Im Rahmen der Erfindung wurde eine Druckluftversorgungsanlage für ein Fahrzeug entwickelt. Diese Anlage umfasst mindestens einen Kompressor, der über mindestens ein Getriebe von der Antriebsmaschine des Fahrzeugs antreibbar ist.

Erfindungsgemäß ist eine Auswerteeinheit vorgesehen, die das Messsignal mindestens eines Sensors als Eingabe erhält und aus diesem Messsignal mindestens eine Kenngröße ermittelt, die ein Maß für die mechanische Belastung des Getriebes ist. Der Sensor ist im Antriebsstrang zwischen der Antriebsmaschine und dem Kompressor und/oder eingangsseitig des Kompressors angeordnet.

Bereits mit dieser einfachsten Ausführungsform der Erfindung kann überwacht werden, ob die tatsächliche mechanische Belastung des Getriebes derjenigen Belastung entspricht, die bei der Dimensionierung des Wartungsintervalls für das Getriebe angenommen wurde. Bei signifikanten Abweichungen kann das, beispielsweise in Kilometern und/oder Zeit angegebene, Wartungsintervall entsprechend angepasst werden. Beispielsweise kann die Kenngröße auf einer Skala zwischen 0 und 10 angezeigt werden und in der Betriebsanleitung spezifiziert sein, dass das Wartungsintervall auf eine mittlere Beanspruchung zwischen 4 und 6 ausgelegt ist. Oberhalb einer mittleren Belastung von 7 kann es halbiert werden, unterhalb einer mittleren Belastung von 3 kann es dagegen verdoppelt werden. Der Zeitpunkt, zu dem die Wartung durchgeführt wird, rückt näher an den Zeitpunkt heran, zu dem eine Wartung aufgrund des Verschleißzustandes des Getriebes tatsächlich geboten ist.

Dabei kann der Sensor insbesondere zur Erfassung einer Vibration, der Drehzahl der Antriebsmaschine und/oder des Luftdrucks eingangsseitig des Kompressors ausgebildet sein. Besonders eine Vibration ist ein sehr guter Indikator für die mechanische Belastung des Getriebes. Es wurde erkannt, dass ein Getriebe beim Antreiben eines Kompressors prinzipiell besonders stark beansprucht wird: Speziell bei einem Kolbenkompressor, der die Drehbewegung aus der Antriebsquelle in eine Auf- und Ab-Bewegung eines oder mehrerer Kolben umwandelt, wechselt das Antriebsmoment bei jedem Arbeitszyklus das Vorzeichen. In der Verdichtungsphase muss zum Aufbau eines Drucks ein positives Drehmoment zugeführt werden, in der Ansaugphase hingegen ein negatives. Da in einem Zahnradgetriebe die ineinandergreifenden Zähne von Antrieb und Abtrieb ein von null verschiebendes Spiel gegeneinander haben müssen, führen derartige Vorzeichenwechsel des Drehmoments dazu, dass die ineinandergreifenden Zähne aneinander schlagen. Jedes dieser Ereignisse trägt zum Verschleiß bei. Dabei bestimmt die Drehzahl des Kompressors, wie häufig diese Ereignisse auftreten. Die Druckdifferenz zwischen dem Kompressorausgang und dem Umgebungsdruck bestimmt, wie stark die Zähne in der Verdichtungsphase aneinanderschlagen. Die Druckdifferenz zwischen Kompressoreingang und Umgebungsdruck bestimmt, wie stark die Zähne in der Ansaugphase aneinanderschlagen. Die Kombination aus Häufigkeit und Stärke der Schläge summiert sich über die Betriebsdauer zum makroskopischen Verschleiß. Mit einem Vibrationssensor ist es möglich, sowohl die Häufigkeit als auch die Stärke der Schläge zu erfassen.

Die Druckdifferenzen zwischen Kompressorausgang und Umgebungsdruck bzw. Kompressoreingang und Umgebungsdruck sowie die Drehzahl des Kompressors sind die wichtigsten Systemparameter, von denen die Stärke bzw. die Häufigkeit der Schläge und damit der Verschleiß abhängen. Diese Abhängigkeit kann jedoch durch weitere äußere Einflüsse verändert werden. Daher ist es vorteilhaft, wenn neben diesen Parametern oder auch alternativ hierzu weitere Messsignale zur Ermittlung der Belastung herangezogen werden, beispielsweise das Messsignal eines Vibrationssensors. Es kann beispielsweise ein Vibrationssensor verwendet werden, der ohnehin schon im Rahmen des Motormanagements an der Antriebsmaschine angeordnet ist.

Vorteilhaft erhält die Auswerteeinheit zusätzlich das Drehmoment und/oder den Öldruck der Antriebsmaschine und/oder den Luftdruck ausgangsseitig des Kompressors als Eingabe und zieht diese Größen zur Ermittlung der Kenngröße heran. Diese Größen verfeinern die Bestimmung der Stärke von Schlägen zwischen ineinandergreifenden Zähnen.

In einer besonders vorteilhaften Ausgestaltung der Erfindung ist die Auswerteeinheit dazu ausgebildet, unter Nutzung der ermittelten Kenngröße eine Prognose für die verbleibende Lebensdauer des Getriebes zu erstellen oder zu modifizieren. Dabei kann insbesondere vorteilhaft der Vergleich der Kenngröße und/oder mindestens eines Messsignals mit einer Spezifikation für die zulässige Belastung des Getriebes in die Ermittlung der Kenngröße und/oder der Prognose einbezogen sein. Es kann beispielsweise ein Integrator für die Kenngröße vorgesehen sein. Die Auswerteeinheit kann den Wert des Integrators zur Ermittlung der Prognose heranziehen. Beispielsweise kann das Getriebe auf eine bestimmte Anzahl von Schlägen mit einer bestimmten Stärke ausgelegt sein. Es kann beispielsweise eine Art Guthaben aufweisen, von dem jeder einzelne Schlag einen durch seine Stärke festgelegten Betrag abbucht. Aus dem Stand des Guthabens und dem durchschnittlichen Verbrauch an Guthaben pro Kilometer Fahrstrecke ergibt sich dann die voraussichtliche Restlaufzeit, bis das Getriebe gewartet werden muss. Eine entsprechende Instrumentenanzeige ist für den Fahrer des Fahrzeugs unmittelbar einsichtig und liefert ihm auch Hinweise, wie er durch optimierte Fahrweise das Wartungsintervall verlängern kann. So liegt es beispielsweise in seiner Hand, durch vorausschauendes Fahren unnötige Bremsvorgänge zu vermeiden oder Bremsvorgänge in längeren Gefällen mit dem dafür vorgesehenen Dauerbremsen statt mit den Betriebsbremsen durchzuführen.

Vorteilhaft erhält die Auswerteeinheit zusätzlich das Messsignal mindestens eines im Antriebsstrang zwischen der Antriebsmaschine und dem Kompressor und/oder eingangsseitig des Kompressors angeordnete Temperatursensors als Eingabe und bezieht diese Eingabe in die Prognose ein. Damit wird der Tatsache Rechnung getragen, dass die mechanische Festigkeit von Materialien, beispielsweise der Metalle für Zahnräder, stark temperaturabhängig ist. Sowohl bei sehr frostigen Temperaturen, die Metalle spröde machen, als auch bei sehr heißen Temperaturen, die Metalle weich machen, ist der Verschleiß unter der gleichen Belastung jeweils überdurchschnittlich. Der Temperatursensor kann beispielsweise zur Erfassung der Öl- und/oder Kühlmitteltemperatur der Antriebsmaschine ausgebildet sein.

Ein einer weiteren besonders vorteilhaften Ausgestaltung der Erfindung ist eine elektronische Steuereinheit vorgesehen, die die ermittelte Kenngröße und/oder die Prognose als Eingabe erhält und mindestens eine Maßnahme zur Reduzierung der mechanischen Belastung des Getriebes einleitet, wenn der Wert der Kenngröße und/oder die Prognose eine vorgegebene Bedingung erfüllt. Dabei können insbesondere sowohl die Auswerteeinheit als auch die elektronische Steuereinheit in bereits bestehende Steuergeräte des Fahrzeugs integriert sein, beispielsweise durch die Erweiterung der jeweiligen Firmware.

Es wurde erkannt, dass es Betriebszustände gibt, in denen der Getriebeverschleiß pro Zeiteinheit bzw. pro Fahrtstrecke weit überdurchschnittlich ist. Weiterhin haben Metalle häufig ein "Gedächtnis" in dem Sinne, dass sie nach einer einmal erlittenen Spitzenbelastung irreversibel verändert werden und fortan auch bei geringeren Belastungen schneller verschleißen. Das Abschneiden von Belastungsspitzen kann also unter Inkaufnahme nur geringer Einbußen an Kompressorleistung die Lebensdauer des Getriebes wesentlich verlängern. Dabei kann die vorgegebene Bedingung insbesondere aus einer Spezifikation für die zulässige Belastung des Getriebes abgeleitet sein. Beispielsweise kann ein absoluter Maximalwert für die Stärke der Schläge zwischen Zahnradzähnen vorgegeben sein, der nicht überschritten werden darf. Es können auch Bedingungen mit dem Ziel vorgegeben sein, beispielsweise eine mehrwöchige Tour mit einer bestimmten Laufstrecke auf jeden Fall zu Ende führen zu können und erst nach Rückkehr eine Werkstatt aufzusuchen.

Die Maßnahme kann beispielsweise eine Reduzierung der Drehzahl des Kompressors und/oder der Antriebsmaschine, ein Abschalten oder Lastlosschalten des Kompressors und/oder eine Änderung von Schwellwerten für den Systemdruck ausgangsseitig des Kompressors, bei deren Über- oder Unterschreiten der Betriebszustand des Kompressors geändert wird, umfassen.

Sämtliche Eingriffe in die Steuerung des Kompressors und/oder der Antriebsmaschine können durch elektrische, mechanische, pneumatische, elektronische, elektromechanische oder elektropneumatische Verbindungen zur elektronischen Steuereinheit und entsprechende Stellglieder erfolgen. Die Auswerteeinheit, die zugehörigen Sensoren sowie die elektronische Steuereinheit können aber auch beispielsweise an ein Fahrzeugbussystem, etwa an einen CAN-Bus, angeschlossen sein. Dies ist insbesondere vorteilhaft, um existierende Sensoren und Stellglieder, die am Fahrzeug für ganz andere Zwecke bereits vorhanden sind, nunmehr auch zur Verringerung des Getriebeverschleißes zu nutzen. Es ist dann kein zusätzlicher Verkabelungsaufwand erforderlich.

Bei der Durchführung von Maßnahmen zur Reduzierung der mechanischen Belastung können Prioritäten gesetzt werden. Je nach Fahrzustand können einige Betriebsparameter wichtiger sein als andere; so kann etwa die Lieferung einer gleichbleibenden Luftmenge pro Zeiteinheit wichtiger sein als die Aufrechterhaltung des Drucks. Es kann dann beispielsweise der Druck reduziert und zugleich die Drehzahl des Kompressors erhöht werden, um bei reduzierter mechanischer Belastung des Getriebes eine gleichbleibende Luftmenge pro Zeiteinheit zu fördern.

In einer besonders vorteilhaften Ausgestaltung der Erfindung ist ausgangsseitig des Kompressors ein Lufttrockner angeordnet. Dieser schützt dann nicht nur in üblicher Weise die angeschlossenen Druckluftverbraucher vor Feuchtigkeit, sondern liefert im Rahmen der Erfindung einen zusätzlichen Parameter, der zur Reduzierung der Getriebebelastung genutzt werden kann. Die Aufnahmekapazität des feuchtigkeitsabsorbierenden Materials im Lufttrockner bietet einen gewissen Spielraum in der Wahl des Zeitpunktes, zu dem der Lufttrockner regeneriert wird.

Bei dem erfindungsgemäßen Verfahren zum Betreiben der Druckluftversorgungsanlage wird daher als Ausgleich für die Maßnahme zur Reduzierung der mechanischen Belastung, eine Regeneration des Lufttrockners aufgeschoben. Auf diese Weise kann beispielsweise die Druckluftversorgung in einer erhöhten Bedarfssituation sichergestellt werden, ohne das Getriebe übermäßig zu verschleißen, indem mit reduzierter Leistung und dafür über einen längeren Zeitraum gefördert wird.

Nachfolgend wird der Gegenstand der Erfindung anhand von Figuren erläutert, ohne dass der Gegenstand der Erfindung hierdurch beschränkt wird. Es ist gezeigt:
- Figur 1: Ausführungsbeispiel der erfindungsgemäßen Druckluftversorgungsanlage
- Figur 2: schematische Darstellung der Ursache für Getriebeverschleiß.

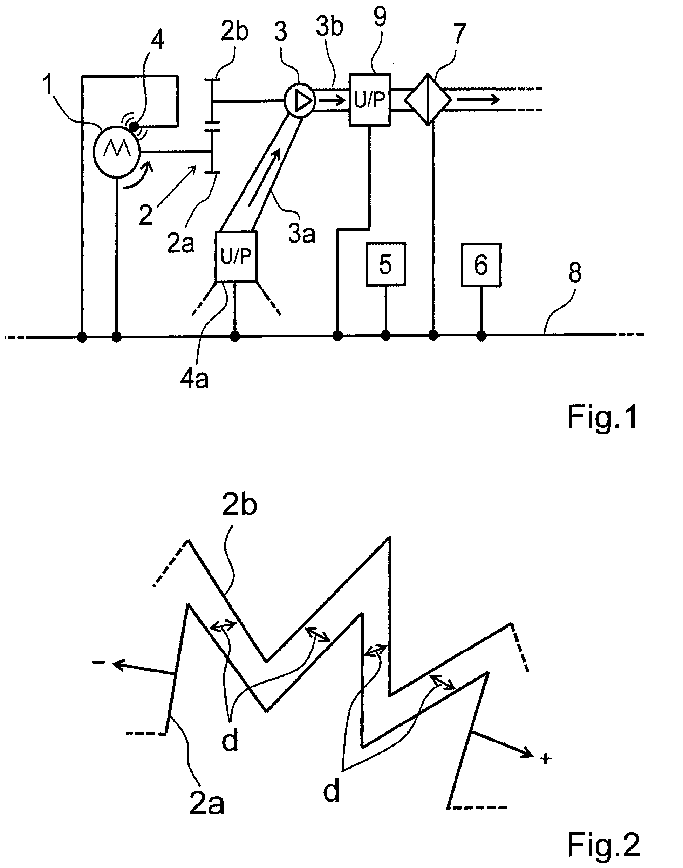

Figur 1 zeigt ein Ausführungsbeispiel der erfindungsgemäßen Druckluftversorgungsanlage. Der Kompressor 3 wird von der Antriebsmaschine 1 des Fahrzeugs über ein Getriebe 2 angetrieben. Das Getriebe 2 umfasst ein antriebsseitiges Zahnrad 2a, das in ein abtriebsseitiges Zahnrad 2b eingreift. Der Kompressor saugt Luft über seinen Eingang 3a an und gibt sie in verdichteter Form an seinem Ausgang 3b aus. Dem Ausgang 3b sind ein Drucksensor 9 sowie ein Lufttrockner 7 nachgeschaltet. Stromabwärts des Lufttrockners 7 wird die Druckluft den (in Figur 1 nicht dargestellten) Verbrauchern zugeführt.

An der Antriebsmaschine 1 ist ein Klopfsensor 4 angeordnet, der die vom Kompressor 3 über die Abtriebswelle, das abtriebsseitige Zahnrad 2b, das antriebsseitige Zahnrad 2a und schließlich über die Antriebswelle in rückwärtiger Richtung auf die Antriebsmaschine 1 übertragenen Vibrationen registriert. Zusätzlich ist eingangsseitig des Kompressors ein Drucksensor 4a am Eingang 3a vorgesehen. Die Messsignale beider Sensoren werden über den Fahrzeugbus 8 der Auswerteeinheit 5 zugeleitet. Auch der Drucksensor 9 ist an den Fahrzeugbus 8 angeschlossen. Die Auswerteeinheit 5 ermittelt aus den aufgenommenen Messwerten eine Kenngröße für die mechanische Belastung des Getriebes 2 sowie eine Prognose für die verbleibende Lebensdauer des Getriebes. Beides wird über den Fahrzeugbus 8 an die elektronische Steuereinheit 6 weitergegeben. Die Steuereinheit 6 entscheidet auf der Grundlage parametrisierter Bedingungen darüber, welche Maßnahmen zur Reduzierung der Belastung des Getriebes 2 gegebenenfalls zu ergreifen sind. So kann beispielsweise die Drehzahl der Antriebsmaschine 1 durch ein entsprechendes, über den Fahrzeugbus 8 übertragenes Signal verlangsamt werden. Im Gegenzug kann das Signal, mit dem der Lufttrockner 7 in den Regenerationsmodus geschaltet wird, verzögert werden, um eine bestimmte geforderte Luftmenge in längerer Zeit mit reduzierter Belastung des Getriebes 2 liefern zu können.

Figur 2 verdeutlicht schematisch den Kontaktbereich, in dem im Getriebe 2 die Zahnräder 2a und 2b Kontakt zueinander haben. Um nicht zu blockieren, müssen die ineinandergreifenden Zähne ein von null verschiebendes Spiel zueinander haben. Dieses Spiel ist in Figur 2 stark übertrieben dargestellt und mit d bezeichnet. Wechselt das zu übertragende Drehmoment zum Positiven, so bewegt sich das Zahnrad 2a relativ zum Zahnrad 2b in der mit "+" bezeichneten Richtung. Nachdem das Spiel d überwunden ist, schlagen die entsprechenden Flanken der Zahnräder 2a und 2b aneinander an. Wechselt das zu übertragende Drehmoment ins Negative, so bewegt sich das Zahnrad 2a relativ zu Zahnrad 2b in der umgekehrten, mit "-" bezeichneten Richtung. Dann schlagen in dieser Richtung Flanken der Zähne aneinander an.

Das Verschleißproblem stellt sich speziell bei Kompressoren für Fahrzeuge, da diese zwecks Einsparung von Bauraum und Gewicht nur wenig überdimensioniert werden. Sie müssen daher häufig mit hoher Drehzahl laufen, was vielen Schlägen der Zahnradzähne gegeneinander entspricht.

### Bezugszeichenliste

- 1: Antriebsmaschine
- 2: Getriebe
- 2a: antriebsseitiges Zahnrad des Getriebes 2
- 2b: abtriebsseitiges Zahnrad des Getriebes 2
- 3: Kompressor
- 3a: Eingang des Kompressors 3
- 3b: Ausgang des Kompressors 3
- 4: Klopfsensor an der Antriebsmaschine 1
- 4a: Drucksensor am Eingang 3a des Kompressors 3
- 5: Auswerteeinheit
- 6: elektronische Steuereinheit
- 7: Lufttrockner
- 8: Fahrzeugbus
- 9: Drucksensor am Ausgang 3b des Kompressors 3

## Patentansprüche

1. Druckluftversorgungsanlage für ein Fahrzeug, umfassend mindestens einen Kompressor (3), der über mindestens ein Getriebe (2, 2a, 2b) von der Antriebsmaschine (1) des Fahrzeugs antreibbar ist,
**dadurch gekennzeichnet, dass**
eine Auswerteeinheit (5) vorgesehen ist, die das Messsignal mindestens eines Sensors (4, 4a), der im Antriebsstrang zwischen der Antriebsmaschine (1) und dem Kompressor (3) und/oder eingangsseitig des Kompressors (3) angeordnet ist, als Eingabe erhält und aus diesem Messsignal mindestens eine Kenngröße ermittelt, die ein Maß für die mechanische Belastung des Getriebes (2, 2a, 2b) ist, wobei die Auswerteeinheit (5) weiterhin dazu ausgebildet ist, unter Nutzung der ermittelten Kenngröße eine Prognose für die verbleibende Lebensdauer des Getriebes (2, 2a, 2b) zu erstellen oder zu modifizieren, und dabei den Vergleich der Kenngröße und/oder mindestens eines Messsignals mit einer Spezifikation für die zulässige Belastung des Getriebes (2, 2a, 2b) in die Ermittlung der Kenngröße und/oder der Prognose einzubeziehen.

2. Druckluftversorgungsanlage nach Anspruch 1, **dadurch gekennzeichnet, dass** eine elektronische Steuereinheit (6) vorgesehen ist, die die ermittelte Kenngröße und/oder die Prognose als Eingabe erhält und mindestens eine Maßnahme zur Reduzierung der mechanischen Belastung des Getriebes (2, 2a, 2b) einleitet, wenn der Wert der Kenngröße und/oder die Prognose eine vorgegebene Bedingung erfüllt.

3. Druckluftversorgungsanlage nach Anspruch 2, **dadurch gekennzeichnet, dass** die Maßnahme eine Reduzierung der Drehzahl des Kompressors (3) und/oder der Antriebsmaschine (1), ein Abschalten oder Lastlosschalten des Kompressors (3) und/oder eine Änderung von Schwellwerten für den Systemdruck ausgangsseitig des Kompressors (3), bei deren Über- oder Unterschreiten der Betriebszustand des Kompressors (3) geändert wird, umfasst.

4. Druckluftversorgungsanlage nach Anspruch 1, **dadurch gekennzeichnet, dass** der Sensor (4, 4a) zur Erfassung einer Vibration, der Drehzahl der Antriebsmaschine (1) und/oder des Luftdrucks eingangsseitig des Kompressors (3) ausgebildet ist.

5. Druckluftversorgungsanlage nach Anspruch 1, **dadurch gekennzeichnet, dass** die Auswerteeinheit (5) zusätzlich das Drehmoment und/oder den Öldruck der Antriebsmaschine (1) und/oder den Luftdruck ausgangsseitig des Kompressors (3) als Eingabe erhält und zur Ermittlung der Kenngröße heranzieht.

6. Druckluftversorgungsanlage nach Anspruch 1, **dadurch gekennzeichnet, dass** ein Integrator für die Kenngröße vorgesehen ist.

7. Druckluftversorgungsanlage nach Anspruch 1, **dadurch gekennzeichnet, dass** die Auswerteeinheit (5) zusätzlich das Messsignal mindestens eines im Antriebsstrang zwischen der Antriebsmaschine (1) und dem Kompressor (3) und/oder eingangsseitig des Kompressors (3) angeordneten Temperatursensors als Eingabe erhält und in die Prognose einbezieht.

8. Druckluftversorgungsanlage nach Anspruch 7, **dadurch gekennzeichnet, dass** der Temperatursensor zur Erfassung der Öl- und/oder Kühlmitteltemperatur der Antriebsmaschine (1) ausgebildet ist.

9. Druckluftversorgungsanlage nach einem der Ansprüche 1 bis 8, **dadurch gekennzeichnet, dass** ausgangsseitig des Kompressors (3) ein Lufttrockner (7) angeordnet ist.

10. Verfahren zum Betreiben einer Druckluftversorgungsanlage nach Anspruch 9, **dadurch gekennzeichnet, dass** als Ausgleich für die Maßnahme zur Reduzierung der mechanischen Belastung des Getriebes (2, 2a, 2b) eine Regeneration des Lufttrockners (7) aufgeschoben wird.

## Claims

1. Compressed air supply system for a vehicle, comprising at least one compressor (3), which is driveable by the drive machine (1) of the vehicle via at least one transmission (2, 2a, 2b),
**characterized in that**
an evaluator (5) is provided, which obtains as input the measurement signal of at least one sensor (4, 4a), which is arranged in the drive train between the drive machine (1) and the compressor (3) and/or on the inlet side of the compressor (3) and determines at least one characteristic variable from this measurement signal, which is a dimension for the mechanical load of the transmission (2, 2a, 2b), wherein the evaluator (5) is furthermore designed in order to make or modify a prediction for the remaining lifespan of the transmission (2, 2a, 2b) utilizing the determined characteristic variable and thereby incorporate the comparison of the characteristic variable and/or at least one measurement signal with a specification for the permissible load of the transmission (2, 2a, 2b) in determining the characteristic variable and/or the prediction.

2. Compressed air supply system according to Claim 1, **characterized in that** an electronic control unit (6) is provided, which obtains as input the determined characteristic variable and/or the prediction and initiates at least one measure for reducing the mechanical load of the transmission (2, 2a, 2b) when the value of the characteristic variable and/or the prediction satisfies a preset condition.

3. Compressed air supply system according to Claim 2, **characterized in that** the measure comprises a reduction of the rotational speed of the compressor (3) and/or of the drive machine (1), a deactivation or unloading of the compressor (3) and/or a change of threshold values for the system pressure on the outlet side of the compressor (3), upon which, when exceeded or undershot, the operating state of the compressor (3) is changed.

4. Compressed air supply system according to Claim 1, **characterized in that** the sensor (4, 4a) is designed for detecting a vibration, the rotational speed of the drive machine (1) and/or of the air pressure on the inlet side of the compressor (3).

5. Compressed air supply system according to Claim 1, **characterized in that** the evaluator (5) additionally obtains the torque and/or the oil pressure of the drive machine (1) and/or the air pressure on the outlet side of the compressor (3) as input, utilizing it for determining the characteristic variable.

6. Compressed air supply system according to Claim 1, **characterized in that** an integrator for the characteristic variable is provided.

7. Compressed air supply system according to Claim 1, **characterized in that** the evaluator (5) additionally obtains as input the measurement signal of at least one temperature sensor arranged in the drive train between the drive machine (1) and the compressor (3) and/or on the inlet side of the compressor (3), incorporating it in the prediction.

8. Compressed air supply system according to Claim 7, **characterized in that** the temperature sensor is designed for detecting the oil and/or coolant temperature of the drive machine (1).

9. Compressed air supply system according to any one of the Claims 1 to 8, **characterized in that** an air dryer (7) is arranged on the outlet side of the compressor (3).

10. Method for operating a compressed air supply system according to Claim 9, **characterized in that** as compensation for the measure for reducing the mechanical load of the transmission (2, 2a, 2b) a regeneration of the air dryer (7) is postponed.

## Revendications

1. Système d'alimentation en air comprimé d'un véhicule, comprenant au moins un compresseur (3), qui, par au moins un train d'engrenage (2, 2a, 2b) peut être entraîné par le moteur (1) d'entraînement du véhicule,
**caractérisé en ce qu'**
il est prévu une unité (5) d'exploitation, qui reçoit, comme entrée, le signal de mesure d'au moins un capteur (4, 4a) monté, dans la chaîne cinématique, entre le moteur (1) d'entraînement et le compresseur (3) et/ou du côté de l'entrée du compresseur (3), et détermine, à partir de ce signal de mesure, au moins une grandeur caractéristique, qui est une mesure de la charge mécanique du train (2, 2a, 2b) d'engrenage, l'unité (5) d'exploitation étant constituée, en outre, pour, en utilisant la grandeur caractéristique déterminée, établir ou modifier un pronostic sur la durée de vie restante du train (2, 2a, 2b) d'engrenage et inclure ainsi, dans la détermination de la grandeur caractéristique et/ou du pronostic, la comparaison de la grandeur caractéristique et/ou d'au moins un signal de mesure avec une spécification pour la charge admissible du train (2, 2a, 2b) d'engrenage.

2. Système d'alimentation en air comprimé suivant la revendication 1, **caractérisé en ce qu'**il est prévu une unité (6) électronique de commande, qui reçoit la grandeur caractéristique déterminée et/ou le pronostic comme entrée et qui fait débuter au moins une mesure de réduction de la charge mécanique du train (2, 2a, 2b) d'engrenage, si la valeur de la grandeur caractéristique et/ou le pronostic satisfont une condition donnée à l'avance.

3. Système d'alimentation en air comprimé suivant la revendication 2, **caractérisé en ce que** la mesure comprend une réduction de la vitesse de rotation du compresseur (3) et/ou du moteur (1) d'entraînement, un arrêt ou une commutation en perte de charge du compresseur (3) et/ou une modification des valeurs de seuil de la pression du système du côté de la sortie du compresseur (3), pour lesquels, si l'on passe au-dessus ou en dessous, l'état de fonctionnement du compresseur (3) est modifié.

4. Système d'alimentation en air comprimé suivant la revendication 1, **caractérisé en ce que** le capteur (4, 4a) est constitué pour détecter une vibration, la vitesse de rotation du moteur (1) d'entraînement et/ou la pression de l'air du côté de l'entrée du compresseur (3).

5. Système d'alimentation en air comprimé suivant la revendication 1, **caractérisé en ce que** l'unité (5) d'exploitation reçoit, en outre, comme entrée, le couple et/ou la pression d'huile du moteur (1) d'entraînement et/ou la pression de l'air du côté de la sortie du compresseur (3) et en tire parti pour déterminer la grandeur caractéristique.

6. Système d'alimentation en air comprimé suivant la revendication 1, **caractérisé en ce qu'**il est prévu un intégrateur de la grandeur caractéristique.

7. Système d'alimentation en air comprimé suivant la revendication 1, **caractérisé en ce que** l'unité (5) d'exploitation reçoit comme entrée, en outre, le signal de mesure d'au moins une sonde de température montée, dans la chaîne cinématique, entre le moteur (1) d'entraînement et le compresseur (3) et/ou du côté de l'entrée du compresseur (3) et l'inclut dans le pronostic.

8. Système d'alimentation en air comprimé suivant la revendication 7, **caractérisé en ce que** la sonde de température est constituée pour détecter la température de l'huile et/ou du fluide de refroidissement du moteur (1) d'entraînement.

9. Système d'alimentation en air comprimé suivant l'une des revendications 1 à 8, **caractérisé en ce qu'**un sécheur (7) d'air est disposé du côté de la sortie du compresseur (3).

10. Procédé pour faire fonctionner un système d'alimentation en air comprimé suivant la revendication 9, **caractérisé en ce que**, comme compensation à la mesure de réduction de la charge mécanique du train (2, 2a, 2b) d'engrenage, on repousse une régénération du sécheur (7) d'air.
